# EUROPÄISCHE PATENTSCHRIFT

(11) **EP 0 904 557 B1**
(45) Veröffentlichungstag und Bekanntmachung des Hinweises auf die Patenterteilung: **31.08.2005**
(21) Anmeldenummer: 97928172.2
(22) Anmeldetag: 11.06.1997
(51) Int. Cl.: G02B 21/00, G02B 26/10

(54) **KONFOKALES MIKROSKOP ZUR OPTISCHEN ERFASSUNG EINES BEOBACHTUNGSVOLUMENS**
CONFOCAL MICROSCOPE FOR OPTICAL DETERMINATION OF AN OBSERVATION VOLUME
MICROSCOPE CONFOCAL POUR DETERMINATION OPTIQUE D'UN VOLUME D'OBSERVATION

(30) Priorität: 11.06.1996 DE 19623230
(43) Veröffentlichungstag der Anmeldung: 31.03.1999
(73) Patentinhaber: Evotec OAI AG, 22525 Hamburg (DE)
(72) Erfinder: HUMMEL, Stefan, D-22607 Hamburg (DE); KASK, Peet, EE3051 Harku (EE)
(74) Vertreter: Hilleringmann, Jochen
(86) Internationale Anmeldenummer: PCT/EP1997/003022
(87) Internationale Veröffentlichungsnummer: WO 1997/048001

(56) Entgegenhaltungen:
- EP-A- 0 508 257
- WO-A-96/11420
- US-A- 3 764 192
- US-A- 5 048 904
- US-A- 5 225 923

## Beschreibung

Die Erfindung betrifft ein konfokales Mikroskop zur optischen Erfassung eines Beobachtungsvolumens, wie es insbesondere bei der Fluoreszenzspektroskopie eingesetzt wird und grundsätzlich aus EP-A-0 508 257 bekannt ist.

Ein konfokales Mikroskop, mit dem sich in einem Beobachtungsvolumen abspielende Prozesse optisch erfassen lassen, ist aus WO-A-94/16313 bekannt. Dieses bekannte Mikroskop wird insbesondere für die Fluoreszenzkorrelationsspektroskopie (FCS) eingesetzt. Das bekannte Mikroskop verfügt über eine Lichtquelle, bei der es sich insbesondere um eine Laserlichtquelle handelt, die einen Lichtstrahl erzeugt. Der Laserlichtstrahl trifft gegebenenfalls nach Konditionierung durch eine Linsenanordnung auf einen dichroitischen Spiegel, der das Licht reflektiert, und zwar in Richtung auf eine Objektivlinsenanordnung, die eine mechanische Apertur aufweist und die das Licht auf den Beobachtungsraum fokussiert. Das in den Beobachtungsraum einfallende Laserlicht regt die sich in dem Beobachtungsvolumen befindliche beispielsweise biologische Probe je nach deren Zusammensetzung zur Fluoreszenz an. Das dabei entstehende Fluoreszenzlicht gelangt in die Objektivlinsenanordnung und von dort durch den dichroitischen Spiegel, um auf eine Beobachtungsoptikanordnung aufzutreffen, mit der sich die im Beobachtungsvolumen abspielenden Prozesse optisch erfassen lassen.

Das bekannte konfokale Mikroskop hat sich in der Praxis grundsätzlich bewährt. Allerdings werden je nach den zu untersuchenden Proben relativ lange Untersuchungszeiträume benötigt, um in der Probe die Entstehung von fluoreszierendem Licht zu beobachten und um eine ausreichende Menge an (optischen) Daten zu erfassen, die eine quantitative Bewertung der in der Probe ablaufenden Prozesse ermöglichen.

Aus EP-A-0 508 257 ist ein konfokales Mikroskop mit einer Lichtquelle, einem Strahlteiler, einer Objektivlinsenanordnung und einer Beobachtungsoptikanordnung bekannt.

Weiterhin sind aus US-A-3,764,192 und WO-A-96/11420 Ablenkspiegelanordnungen bekannt, die einen oszillierenden Spiegel aufweisen, der so angeordnet ist, dass sich bei Oszillation die optischen Achsen des reflektierten Lichtstrahls in einem gemeinsamen Schnittpunkt treffen. Gemeinsam ist diesem Stand der Technik, dass der (bzw. die) oszillierende(n) Spiegel achsenversetzt angeordnet ist (sind), d.h. die Oszillationsachse des Spiegel verläuft nicht durch das Spiegelzentrum, sondern seitlich versetzt, so dass sich die reflektierten Lichtstrahlen bei Oszillation des Spiegels in einem invarianten Schnittpunkt treffen.

Der Erfindung liegt die Aufgabe zugrunde, ein konfokales Mikroskop zur optischen Erfassung eines Beobachtungsvolumens für die Fluoreszenzspektroskopie bzw. einen Zusatz für ein solches Mikroskop zu schaffen, so dass sich Proben in kürzerer Zeit optisch erfassen lassen.

Zur Lösung dieser Aufgabe wird mit der Erfindung ein konfokales Mikroskop gemäß Anspruch 1 vorgeschlagen. Die Unteransprüche betreffen zusätzliche Ausgestaltungen der Erfindung.

Das erfindungsgemäße konfokale Mikroskop ist mit einer Ablenkspiegelanordnung versehen, die mindestens einen (objektivseitigen) Ablenkspiegel aufweist. Dieser objektivseitige Ablenkspiegel ist um eine Normalpunktlage oszillierbar angeordnet. Durch Oszillation dieses Ablenkspiegels wird der Winkel, unter dem das Anregungslicht auf die Objektivlinsenanordnung trifft, verändert. Dabei ist erfindungsgemäß vorgesehen, dass das Anregungslicht in der mechanischen Apertur der Objektivlinsenanordnung derart bewegt wird, dass sich der Anregungslichtstrahl unter jedem Einfallswinkel im Zentrum der mechanischen Apertur befindet. Mit anderen Worten kreuzen sich also bei Oszillation des objektivseitigen Ablenkspiegels die optischen Achsen des jeweils reflektierten Anregungslichts im wesentlichen in einem gemeinsamen Schnittpunkt, der im Bereich der mechanischen Apertur der Objektivlinse sitzt und sich insbesondere in Ausbreitungsrichtung des Anregungslichtes hinter der mechanischen Apertur der Objektivlinsenanordnung befindet. Dabei ist die Achse, um die der objektivseitige Ablenkspiegel oszilliert, gleich der Schnittlinie der Ebene, in der sich der objektivseitige plane Ablenkspiegel befindet, mit derjenigen Ebene, die durch den gemeinsamen Schnittpunkt der optischen Achsen des jeweils reflektierten Anregungslichts verläuft und sich senkrecht zur optischen Achse des reflektierten Anregungslichts bei in seiner Normalpunktlage befindlichem objektivseitigen Ablenkspiegel erstreckt.

Mit dem erfindungsgemäßen Mikroskop können aufgeweitete Anregungslichtstrahlen größeren Durchmessers in die Objektivlinsenanordnung eingekoppelt werden, ohne dass das Profil des Anregungslichtstrahls bei Änderung seines Einfallswinkels bereichsweise abgeschnitten wird. Hierzu benötigt man erfindungsgemäß lediglich einen planen Ablenkspiegel, d.h. insbesondere keine aufwendigen optischen Baukomponenten. Der Ablenkspiegel der Ablenkspiegelanordnung ist mit einem Oszillationsantrieb versehen und oszilliert vorzugsweise um bis zu 5°, vorzugsweise bis zu 3° und insbesondere um 2° zu beiden Seiten seiner Normalpunktlage. Hierfür geeignete Oszillationsantriebe sind im Stand der Technik grundsätzlich bekannt.

Bei dem erfindungsgemäßen Mikroskop ist die Anregungsoptik zwischen dem Beobachtungsvolumen und dem dichroitischen Spiegel auch Teil der Detektionsoptik, die um die hinter dem dichroitischen Spiegel befindliche Beobachtungsoptikanordnung ergänzt ist. Es handelt sich bei dem erfindungsgemäßen Mikroskop also um ein echtes konfokales System.

Vorzugsweise handelt es sich bei der Ablenkspiegelanordnung des erfindungsgemäßen konfokalen Mikroskops um eine Zusatz-Optik für bestehende konfokale Mikroskope, die diesen hinzugefügt werden kann, ohne dass ein Eingriff in den optischen Aufbau des bestehenden Mikroskops notwendig ist. Das bestehende konfokale Mikroskop hat im Regelfall einen aufgeweiteten und kollimierten Anregungslichtstrahl, welcher direkt über die Ablenkspiegelanordnung in das Objektiv eingekoppelt werden kann. Hierzu muss die Ablenkspiegelanordnung lediglich in die (Revolver-)Öffnung des stehenden Mikroskops eingeschraubt werden. Die Objektivlinsenanordnung des bestehenden Mikroskops wird direkt an der Ablenkspiegelanordnung selbst angebracht.

Durch Verwendung eines Ablenkspiegels ist es möglich, das von der Objektivlinsenanordnung fokussierte Anregungslicht in einer Dimension, d.h. linear durch die Probe vor- und zurückzubewegen. Um das Beobachtungsvolumen (d.h. das fokussierte Anregungslicht) zweidimensional durch die Probe zu bewegen, ist gemäß einer vorteilhaften Weiterbildung der Erfindung vorgesehen, zusätzlich einen lichtquellenseitigen Ablenkspiegel zu verwenden, der zwischen dem objektivseitigen Ablenkspiegel und dem dichroitischen Spiegel angeordnet ist. Der lichtquellenseitige Ablenkspiegel oszilliert ebenfalls um eine Normalpunktlage, und zwar derart, dass sich bei Oszillation des lichtquellenseitigen Ablenkspiegels die optischen Achsen des jeweils reflektierten Anregungslichts annähernd in im wesentlichen einem gemeinsamen Schnittpunkt schneiden, der im Bereich der Ebene des objektivseitigen Ablenkspiegels liegt. Beide Ablenkspiegel oszillieren um rechtwinklig zueinander verlaufende Oszillationsachsen, wobei die Oszillationsachse des lichtquellenseitigen Ablenkspiegels gleich der Schnittlinie der Ebene des lichtquellenseitigen Ablenkspiegels mit derjenigen Ebene ist, die durch den gemeinsamen Schnittpunkt der optischen Achsen des reflektierten Anregungslichts und senkrecht zur optischen Achse des reflektierten Lichts bei in seiner Normalpunktlage befindlichem lichtquellenseitigen Ablenkspiegel verläuft. Durch die Verwendung zweier Ablenkspiegel, die um senkrecht zueinander verlaufende Achsen oszillieren, lässt sich das fokussierte Licht in einer Ebene, also zweidimensional durch die Probe bewegen.

Der wesentliche Aspekt bei dem erfindungsgemäßen konfokalen Mikroskop ist darin zu sehen, dass durch die spezielle Anordnung der Oszillationsachsen der Ablenkspiegel erreicht wird, dass das Anregungslicht unter jedem Einfallswinkel in der mechanischen Apertur der Objektivlinsenanordnung auftrifft, ohne dass der Anregungslichtstrahl bereichsweise abgeschnitten wird. Erfindungsgemäß werden lediglich plane, also konstruktiv einfache Ablenkspiegel eingesetzt. Bei diesen Ablenkspiegeln kann es sich um runde oder ellipsenförmige Spiegel handeln. Im letztgenannten Fall können die Ränder abgerundet oder polygonal ausgebildet sein. Im Falle der Verwendung elliptischer Ablenkspiegel, die jeweils eine Langsachse sowie eine dazu senkrecht verlaufende Hochachse aufweisen, sind die beiden Ablenkspiegel vorzugsweise derart angeordnet, dass ihre Längsachsen um 90° verdreht zueinander sind und sich unter einem Winkel von 45° schneiden.

Nachfolgend wird anhand der Figuren ein Ausführungsbeispiel der Erfindung näher erläutert. Im einzelnen zeigen:
- Fig. 1: schematisch den Strahlengang zwischen der Lichtquelle, dem Beobachtungsvolumen und einem Detektor eines konfokalen Mikroskops mit einer Ablenkspiegelanordnung zum Abtasten einer zu untersuchenden Probe durch Bewegen des Beobachtungsvolumens durch die Probe,
- Fig. 2: eine vereinfachte Darstellung der Ablenkspiegelanordnung zur Verdeutlichung der Anordnung eines Ablenkspiegels zur eindimensionalen Bewegung des Beobachtungsvolumens und
- Fig. 3: eine perspektivische Darstellung der beiden Ablenkspiegel und der Objektivlinsenanordnung.

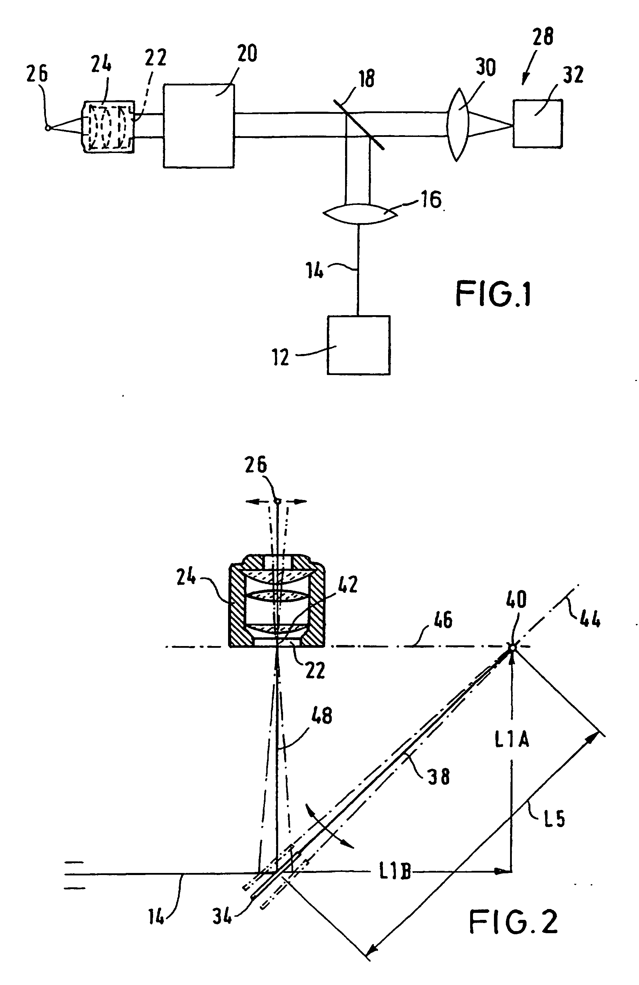

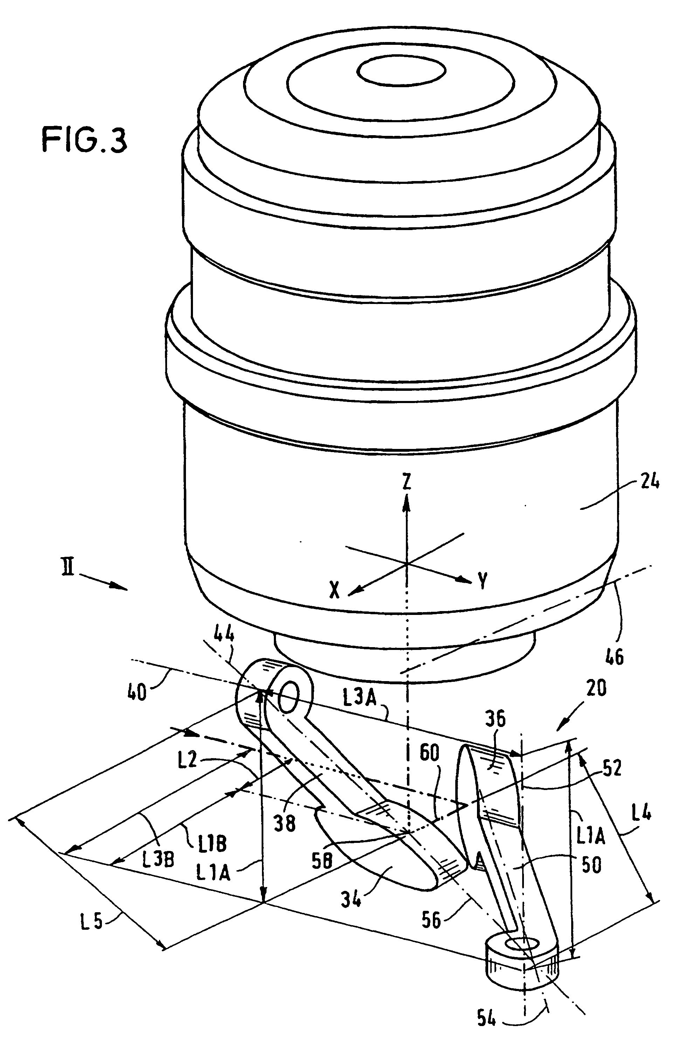

In Fig. 1 ist schematisch der Strahlengang bei einem konfokalen Mikroskop 10 dargestellt. Das konfokale Mikroskop 10 weist eine Laserlichtquelle 12 auf, die Anregungslicht 14 aussendet. Das Anregungslicht 14 trifft auf eine Konditionierungsoptik 16 auf, die den Anregungslichtstrahl aufweitet und parallelisiert. Hinter der Konditionierungsoptik 16 trifft der Anregungslichtstrahl auf einen dichroitischen Spiegel 18, der unter einem Winkel von 45° zur optischen Achse des Anregungslichts 14 angeordnet ist. Der dichroitische Spiegel 18 reflektiert das Anregungslicht zu einer Ablenkspiegelanordnung 20, die anhand der Fign. 2 und 3 näher erläutert werden wird. Von der Ablenkspiegelanordnung 20 aus gelangt das Anregungslicht 14 durch die mechanische Apertur 22 einer Objektivlinsenanordnung 24, um von dieser im Beobachtungsvolumen 26 fokussiert zu werden. Im Beobachtungsvolumen 26 regt das Anregungslicht 14 eine zu untersuchende Probe zur Fluoreszenz an. Das Fluoreszenzlicht gelangt durch die Objektivlinsenanordnung 24 und die Ablenkspiegelanordnung 20 zum dichroitischen Spiegel 18, durch den es hindurchtritt, um auf eine Beobachtungsoptikanordnung 28 aufzutreffen. Die Beobachtungsoptikanordnung 28 weist eine Linsenanordnung 30 und einen Detektor 32 auf.

Der Aufbau der Ablenkspiegelanordnung 20 wird nachfolgend anhand der Fign. 2 und 3 erläutert. Die Ablenkspiegelanordnung 20 weist zwei Ablenkspiegel 34,36 auf, von denen der Ablenkspiegel 34 im Strahlengang der Objektivlinse 24 zugewandt ist (objektivseitiger Ablenkspiegel) und der Ablenkspiegel 36 zwischen dem dichroitischen Spiegel 18 und dem objektivseitigen Ablenkspiegel 34 positioniert ist (lichtquellenseitiger Ablenkspiegel). Fig. 2 zeigt eine Seitenansicht der Darstellung gemäß Fig. 3 in Richtung des Pfeils II, wobei aus Vereinfachungsgründen der lichtquellenseitige Ablenkspiegel 36 nicht eingezeichnet ist. Wie man anhand der Darstellung gemäß Fig. 2 erkennen kann, trifft das Anregungslicht 14 unter im wesentlichen 45° auf den objektivseitigen Ablenkspiegel 34, der das Anregungslicht in Richtung auf die Objektivlinsenanordnung 24 reflektiert, wo es durch die Apertur 22 hindurchtritt. Der objektivseitige Ablenkspiegel 34 ist plan und an einem Arm 38 angeordnet, der um eine Oszillationsachse 40 hin und her oszilliert. Durch die Oszillation des Ablenkspiegels 34 um etwa ± 2° um die Normalpunktlage (45°-Ausrichtung zum auftreffende Anregungslicht 14) wird das Anregungslicht unterschiedlich abgelenkt, wobei sich die optischen Achsen des jeweils reflektierten Anregungslichtes im Schnittpunkt 42 schneiden. Dieser Schnittpunkt 42 liegt kurz hinter der Apertur 22 der Objektivlinsenanordnung 24. Um dies zu realisieren, befindet sich die Oszillationsachse 40 innerhalb der vom planen Spiegel 34 aufgespannten Ebene 44. Ferner liegt die Oszillationsachse 40 in derjenigen Ebene 46, die senkrecht zum Anregungslicht 48 bei in seiner Normalpunktlage befindlichem Ablenkspiegel 34 verläuft. Mit anderen Worten fällt die Oszillationsachse 40 mit der Schnittlinie der Ebenen 44 und 46 zusammen.

In exakt der gleichen Weise ist der lichtquellenseitige Spiegel 36 in Bezug auf den Spiegel 34 angeordnet. D.h., dass der Ablenkspiegel 36 an einem Arm 50 befestigt ist, der um eine Oszillationsachse 52 oszilliert. Diese Oszillationsachse 52 ist die Schnittlinie zwischen der von dem planen Ablenkspiegel 36 aufgespannten Ebene 54 und der Ebene 56, die durch den gemeinsamen Schnittpunkt 58 des bei Oszillation des Ablenkspiegels 36 reflektierten Lichts verläuft und sich senkrecht zum Reflexionslicht 60 bei in seiner Normalpunktlage befindlichem Ablenkspiegel 36 erstreckt. Mit anderen Worten fällt also die Oszillationsachse 52 mit der Schnittlinie der Ebenen 54 und 56 zusammen.

Die beiden Ablenkspiegel 34 und 36 der Ablenkspiegelanordnung 20 können kreisförmig oder ellipsenförmig ausgebildet sein, wobei die Ränder durch einen Polygonzug angenähert sind oder rund ausgebildet sind. Die beiden Ablenkspiegel 34 und 36 werden insbesondere linearen harmonischen Schwingungen (beispielsweise Sinus, Rechteck, Dreieck, Sägezahn) angetrieben. Entsprechende Antriebe sind grundsätzlich bekannt. Die Frequenz, die Amplitude und die Phasenlage, mit denen die beiden Ablenkspiegel 34 und 36 oszillieren, sind getrennt voneinander einstellbar. Variiert man diese Parameter in bestimmten Verhältnissen, so können Lissajous-Figuren erzeugt werden, die den Untersuchungsbereich (Probe) vollständig abfahren. Diese Figuren sind mathematisch vollständig beschrieben und können in einer Analyse berücksichtigt werden.

Für die relativen Abmessungen der Längen der Arme 38,50, der Anordnung und Beabstandung der beiden Oszillationsachsen 40 und 52 gelten die in Fig. 3 eingezeichneten Strecken, wobei gleich lange Abstände bzw. Strecken mit gleichen Bezugszeichen versehen sind. Es geltende folgende Beziehungen:
L1A = L1B
L3A = L3B
L3B = L1B + L2
L4 = √2·L3A
L5 = √2·L1B.

## Patentansprüche

1. Konfokales Mikroskop zur optischen Erfassung eines Beobachtungsvolumens, mit
- einer Lichtquelle (12) zur Erzeugung von Anregungslicht (14),
- einem dichroitischen Spiegel (18), von dem das auftreffende Anregungslicht (14) der Lichtquelle (12) reflektiert wird,
- einer eine mechanische Apertur (22) aufweisenden Objektivlinsenanordnung (24), die das von dem dichroitischen Spiegel (18) reflektierte Anregungslicht (14) empfängt und auf das Beobachtungsvolumen (26) fokussiert, und
- einer Beobachtungsoptikanordnung (28), die von dem Beobachtungsvolumen (26) ausgehendes und durch den dichroitischen Spiegel (18) hindurchtretendes Licht empfängt,
**dadurch gekennzeichnet,**
- **dass** zwischen der Lichtquelle (12) und dem dichroitischen Spiegel (18) eine Konditionierungsoptik (16) zur Kollimation und Aufweitung des Anregungslichtes (14) angeordnet ist,
- **dass** sich zwischen dem dichroitischen Spiegel (18) und der Objektivlinsenanordnung (24) eine Ablenkspiegelanordnung (20) befindet, die einen planen objektivseitigen Ablenkspiegel (34) aufweist, der um eine Normalpunktlage oszillierbar angeordnet ist,
- **dass** der Winkelbereich der Oszillation des objektivseitigen Ablenkspiegels (34) derart eingeschränkt ist, dass sich alle optischen Achsen des an ihm reflektierten Anregungslichts ungefähr in einem Punkt (42) schneiden,
- **dass** die Oszillationsachse (40) des objektivseitigen Ablenkspiegels (34) gleich der Schnittlinie der von dem objektivseitigen Ablenkspiegel (34) aufgespannten Ebene (44) mit derjenigen Ebene (46) ist, die durch den gemeinsamen Punkt (42) der optischen Achsen des an dem objektivseitigen Ablenkspiegel (34) reflektierten Anregungslichts und senkrecht zur optischen Achse des reflektierten Lichts (48) bei in seiner Normalpunktlage befindlichem objektivseitigen Ablenkspiegel (34) verläuft, und
- **dass** der Einfallswinkel des Anregungslichts auf den objektivseitigen Ablenkspiegel (34) so gewählt ist, dass der Punkt (42), in dem sich alle optischen Achsen des vom objektivseitigen Ablenkspiegel (34) reflektierten Anregungslichts ungefähr schneiden, im Bereich des Zentrums der mechanischen Apertur (22) der Objektivlinsenanordnung (24) liegt.

2. Konfokales Mikroskop nach Anspruch 1, **dadurch gekennzeichnet,**
- **dass** die Ablenkspiegelanordnung (20) einen planen lichtquellenseitigen Ablenkspiegel (36) aufweist, der um eine Normalpunktlage oszillierbar angeordnet ist,
- **dass** der Winkelbereich der Oszillation des lichtquellenseitigen Ablenkspiegels (36) derart eingeschränkt ist, dass sich alle optischen Achsen des an ihm reflektierten Anregungslichts ungefähr in einem Punkt (58) schneiden,
- **dass** die Oszillationsachse (52) des lichtquellenseitigen Ablenkspiegels (36) gleich der Schnittlinie der von dem lichtquellenseitigen Ablenkspiegel (36) aufgespannten Ebene (54) und derjenigen Ebene (56) ist, die durch den gemeinsamen Punkt (58) der optischen Achsen des an dem lichtquellenseitigen Ablenkspiegel (36) reflektierten Anregungslichts und senkrecht zur optischen Achse des reflektierten Anregungslichts bei in seiner Normalpunktlage befindlichem lichtquellenseitigen Ablenkspiegel (36) verläuft, und
- **dass** der Einfallswinkel des Anregungslichts auf den lichtquellenseitigen Ablenkspiegel (36) so gewählt ist, dass der Punkt (58), in dem sich alle optischen Achsen des vom lichtquellenseitigen Ablenkspiegel (36) reflektierten Anregungslichts ungefähr schneiden, in der von dem objektivseitigen Ablenkspiegel (34) aufgespannten Ebene (44) liegt.

3. Konfokales Mikroskop nach Anspruch 1 oder 2, **dadurch gekennzeichnet, dass** der objektivseitige Ablenkspiegel (34), der lichtquellenseitige Ablenkspiegel (36) oder der objektivseitige und der lichtquellenseitige Ablenkspiegel (34,36) der Ablenkspiegelanordnung (20) um bis zu 5°, vorzugsweise 3°, und insbesondere 2° zu jeweils beiden Seiten seiner Normalpunktlage oszillierbar ist.

4. Konfokales Mikroskop nach einem der Ansprüche 1 bis 3, **dadurch gekennzeichnet, dass** der objektivseitige Ablenkspiegel (34), der lichtquellenseitige Ablenkspiegel (36) oder der objektivseitige und der lichtquellenseitige Ablenkspiegel (34,36) der Ablenkspiegelanordnung (20) nach Art einer Ellipse mit einer Längsachse sowie einer dazu senkrecht verlaufenden Hochachse und mit einem runden oder polygonalen Randverlauf ausgebildet ist und dass die beiden ellipsenförmigen Ablenkspiegel (34,36) derart angeordnet sind, dass die Längsachsen der beiden Ellipsen um 90° verdreht zueinander verlaufen und sich unter einem Winkel von 45° schneiden.

5. Konfokales Mikroskop nach einem der Ansprüche 1 bis 3, **dadurch gekennzeichnet, dass** der objektivseitige Ablenkspiegel (34), der lichtquellenseitige Ablenkspiegel (36) oder der objektivseitige und der lichtquellenseitige Ablenkspiegel (34,36) der Ablenkspiegelanordnung (20) kreisförmig ist.

6. Konfokales Mikroskop nach einem der Ansprüche 1 bis 5, **dadurch gekennzeichnet, dass** die Lichtquelle (14) eine Laserlichtquelle ist.

## Claims

1. A confocal microscope for optical detection of an observation volume, comprising
- a light source (12) for generating excitation light (14),
- a dichroic mirror (18) reflecting the excitation light (14) impinging thereon from the light source (12),
- an objective lens arrangement (24) with a mechanical aperture (22), receiving the excitation light (14) reflected by the dichroic mirror (18) and focusing the light onto the observation volume (26), and
- an observation lens arrangement (28) receiving light coming from the observation volume (26) and passing through the dichroic mirror (18),
**characterized in that**
- between the light source (12) and the dichroic mirror (18), a conditioning optic (16) is arranged for collimating and expanding the excitation light (14),
- between the dichroic mirror (18) and the objective lens arrangement (24), a deflection mirror arrangement (20) is located having a planar deflection mirror (34) on the side of the objective, which mirror is arranged to oscillate about a normal position, such that
- upon oscillation of the objective-side mirror (34), the optical axes of the respective reflected excitation light intersect in a substantially common intersection (42) in the area of the mechanical aperture (22) of the objective lens arrangement (24), and
- the oscillation axis (40) of the objective-side deflection mirror (34) coincides with the line of intersection of the plane (44), in which the objective-side deflection mirror (34) lies, and the plane (46) extending through the common intersection (42) of the optical axes of the reflected excitation light and perpendicular to the optical axis of the reflected light (48), when the objective-side deflection mirror (34) is in its normal position, and
- **that** the angle of incidence of the excitation light onto the objective-side deflection mirror (34) is selected such that the point (42), in which all optical axes of the excitation light reflected by the objective-side deflection mirror (34) roughly intersect, is situated in the area of the centre of the mechanical aperture (22) of the objective lens arrangement (24).

2. The confocal microscope of claim 1, **characterized in**
- **that** the deflection mirror arrangement (20) comprises a planar deflection mirror (36) on the side of the light source, arranged for oscillation about a normal position,
- **that** the angular range of oscillation of the light source-side deflection mirror (36) is restricted such all optical axes of the excitation light reflected thereby intersect substantially in one point (58),
- the oscillation axis (52) of the deflection mirror (36) on the side of the light source coincides with the line of intersection of the plane (54) defined by the deflection mirror (36) on the side of the light source and the plane (56) extending through the common intersection (58) of the optical axes of the reflected excitation light and perpendicular to the optical axis of the reflected light, when the deflection mirror (36) on the side of the light source is in its normal position, and
- **that** the angle of incidence of the excitation light onto the objective-side deflection mirror (34) is selected such that the point (42), in which all optical axes of the excitation light reflected by the light source-side deflection mirror (36) roughly intersect, is situated in the plane (44) established by the objective-side deflection mirror (34).

3. The confocal microscope of claim 1 or 2, **characterized in that** the objective-side deflection mirror (34), the light source-side deflection mirror (36) or the objective-side deflection mirror and the light source-side deflection mirror (34, 36) of the deflection mirror arrangement (20) may be oscillated by up to 5°, preferably 3°, and most preferably by 2° to both sides of its normal position.

4. The confocal microscope of one of claims 1 to 3, **characterized in that** the objective-side deflection mirror (34), the light source-side deflection mirror (36) or the objective-side deflection mirror and the light source-side deflection mirror (34, 36) of the deflection mirror arrangement (20) is designed as an ellipse with a longitudinal axis and a normal axis perpendicular thereto and having a round or polygonal edge shape, and that the two elliptic deflection mirrors (34, 36) are arranged such that the longitudinal axes of the two ellipses extend mutually shifted by 90° and intersecting under an angle of 45°.

5. The confocal microscope of one of claims 1 to 3, **characterized in that** the objective-side deflection mirror (34), the light source-side deflection mirror (36) or the objective-side deflection mirror and the light source-side deflection mirror (34, 36) of the deflecting mirror arrangement (20) is circular.

6. The confocal microscope of one of claims 1 to 5, **characterized in that** the light source (14) is a laser light source.

## Revendications

1. Microscope confocal pour détermination optique d'un volume d'observation, comprenant
- une source de lumière (12) pour générer de la lumière d'excitation (14),
- un miroir dichroïque (18) qui reflète la lumière d'excitation (14) incidente issue de la source de lumière (12),
- un dispositif de lentilles d'objectif (24) présentant une ouverture (22) mécanique qui reçoit la lumière d'excitation (14) reflétée par le miroir dichroïque (18) et la focalise sur le volume d'observation (26), et
- un dispositif optique d'observation (28) qui reçoit la lumière partant du volume d'observation (26) et traversant le miroir dichroïque (18),
**caractérisé en ce qu'**
- une optique de conditionnement (16) est disposée entre la source de lumière (12) et le miroir dichroïque (18) pour la collimation et la divergence de la lumière d'excitation (14),
- un dispositif de miroirs de déviation (20) se trouve entre le miroir dichroïque (18) et le dispositif de lentilles d'objectif (24), qui présente un miroir plan côté objectif (34) disposé de manière à pouvoir osciller autour d'une position ponctuelle normale,
- la plage angulaire de l'oscillation du miroir de déviation côté objectif (34) est limitée de telle sorte que tous les axes optiques de la lumière d'excitation reflétée sur celui-ci se coupent approximativement en un point (42),
- l'axe d'oscillation (40) du miroir de déviation côté objectif (34) est la ligne d'intersection du plan (44) couvert par le miroir de déviation côté objectif (34) et du plan (46) qui s'étend à travers le point commun (42) des axes optiques de la lumière d'excitation reflétée sur le miroir de déviation côté objectif (34) et perpendiculairement à l'axe optique de la lumière reflétée (48) lorsque le miroir de déviation côté objectif (34) se trouve dans sa position ponctuelle normale, et
- l'angle d'incidence de la lumière d'excitation sur le miroir de déviation côté objectif (34) est choisi de telle sorte que le point (42), dans lequel se coupent approximativement tous les axes optiques de la lumière d'excitation reflétée par le miroir de déviation côté objectif (34), se situe dans la zone du centre de l'ouverture (22) mécanique du dispositif de lentilles d'objectif (24).

2. Microscope confocal selon la revendication 1,
**caractérisé en ce que**
- le dispositif de miroirs de déviation (20) présente un miroir de déviation plan côté source de lumière (36) disposé de manière à pouvoir osciller autour d'une position ponctuelle normale,
- la plage angulaire de l'oscillation du miroir de déviation côté source de lumière (36) est limitée de telle sorte que tous les axes optiques de la lumière d'excitation reflétée sur celui-ci se coupent approximativement en un point (58),
- l'axe d'oscillation (52) du miroir de déviation côté source de lumière (36) est la ligne d'intersection du plan (54) couvert par le miroir de déviation côté source de lumière (36) et du plan (56) qui s'étend à travers le point commun (58) des axes optiques de la lumière d'excitation reflétée sur le miroir de déviation côté source de lumière (36) et perpendiculairement à l'axe optique de la lumière d'excitation reflétée lorsque le miroir de déviation côté source de lumière (36) se trouve dans sa position ponctuelle normale, et
- l'angle d'incidence de la lumière d'excitation sur le miroir de déviation côté source de lumière (36) est choisi de telle sorte que le point (58), dans lequel se coupent approximativement tous les axes optiques de la lumière d'excitation reflétée par le miroir de déviation côté source de lumière (36), se situe dans le plan (44) couvert par le miroir de déviation côté objectif (34).

3. Microscope confocal selon la revendication 1 ou 2,
**caractérisé en ce que** le miroir de déviation côté objectif (34), le miroir de déviation côté source de lumière (36) ou les miroirs côté objectif et côté source de lumière (34, 36) du dispositif de miroirs de déviation (20) peuvent osciller respectivement des deux côtés jusqu'à 5°, de préférence 3°, et notamment 2° par rapport à leur position ponctuelle normale.

4. Microscope confocal selon l'une quelconque des revendications 1 à 3,
**caractérisé en ce que** le miroir de déviation côté objectif (34), le miroir de déviation côté source de lumière (36) ou les miroirs côté objectif et côté source de lumière (34, 36) du dispositif de miroirs de déviation (20) ont la forme d'une ellipse avec un axe longitudinal ainsi qu'un axe vertical perpendiculaire à celui-ci et avec une évolution périphérique ronde ou polygonale, et les deux miroirs de déviation en forme d'ellipse (34, 36) sont disposés de telle sorte que les axes longitudinaux des deux ellipses s'étendent tournés de 90° l'un par rapport à l'autre et se coupent sous un angle de 45°.

5. Microscope confocal selon l'une des revendications 1 à 3,
**caractérisé en ce que** le miroir de déviation côté objectif (34), le miroir de déviation côté source de lumière (36) ou les miroirs côté objectif et côté source de lumière (34, 36) du dispositif de miroirs de déviation (20) sont circulaires.

6. Microscope confocal selon l'une quelconque des revendications 1 à 5,
**caractérisé en ce que** la source de lumière (14) est une source de lumière laser.
